# EUROPÄISCHE PATENTANMELDUNG

(11) **EP 2 253 652 A1**
(43) Veröffentlichungstag der Anmeldung: **24.11.2010**
(21) Anmeldenummer: 10004214.2
(22) Anmeldetag: 21.04.2010
(51) Int. Cl.: C08G 18/66, C08K 5/00

(54) **Polyurethanschaum und dessen Verwendung sowie Verfahren zur Herstellung eines Polyurethanschaums**

(30) Priorität: 27.04.2009 DE 102009018728
(71) Anmelder: Schaum-Chemie Wilhelm Bauer GmbH & Co. KG, 45141 Essen (DE)
(72) Erfinder: Fach, Thomas, 45259 Essen (DE); Klösener, Ralf, 45289 Essen (DE)
(74) Vertreter: Ksoll, Peter

(57) **Zusammenfassung**

Die vorliegende Erfindung betrifft einen Polyurethanschaum umfassend ein thermochromes Farbmittel, die Verwendung des Polyurethanschaums als Halbzeug oder als Komponente einer Polierscheibe. Die Erfindung betrifft ferner ein Verfahren zur Herstellung des erfindungsgemäßen Polyurethanschaums.

## Beschreibung

Die vorliegende Erfindung betrifft einen Polyurethanschaum umfassend ein thermochromes Farbmittel, die Verwendung des Polyurethanschaums als Halbzeug oder als Komponente einer Polierscheibe. Die Erfindung betrifft ferner ein Verfahren zur Herstellung des erfindungsgemäßen Polyurethanschaums.

Als Polyurethane werden Polymere bezeichnet, deren Wiederholungseinheiten durch Urethan-Gruppierungen -NH-CO-O- verknüpft sind. Polyurethane werden im Allgemeinen erhalten durch Polyaddition aus zwei- oder höherwertigen Alkoholen und zwei- oder höherwertigen Isocyanaten. Der Einsatz von bifunktionellen Alkoholen und Isocyanaten in äquimolaren Verhältnissen führt zu linearen Polyurethanen. Verzweigte und vernetzte Produkte fallen bei Verwendung bzw. Mitverwendung von höher funktionellen Edukten bzw. auch bei Isocyanat-Überschuss an, bei dem Isocyanat-Gruppen mit Urethan- bzw. Harnstoffgruppen unter Ausbildung von Allophanat- bzw. Biorethstrukturen reagieren. Entsprechend fallen je nach Wahl und stöchiometrischer Verhältnisse der Ausgangsstoffe Polyurethane mit sehr unterschiedlichen mechanischen Eigenschaften an, die als Bestandteile von Klebstoffen und Lacken (Polyurethan-Harze), als lonomere, als thermosplastisches Material für Lagerteile, Rollen, Reifen, Walzen verwendet werden und als mehr oder weniger harte Elastomere in Faserform oder als Polyether- bzw. Polyesterurethan-Kautschuk, als duroplastische Gießharze und vor allem aber als Schaumkunststoffe vielfältige Einsatzmöglichkeiten finden.

Polyurethanschäume entstehen bei der Polyaddition, wenn Wasser und/oder Carbonsäuren zugegen sind, wobei diese mit Isocyanaten unter Abspaltung von auftreibendem und

Schaum-bildend wirkendem Kohlendioxid nach folgender Gleichnung reagieren.

R-N=C=O + HOH + O=C=N-R → R-NH-CO-NH-R + CO₂

Mit Polyalkylenglycolethern als Diolen und Wasser als Reaktionskomponente gelangt man beispielsweise zu Polyurethanweichschäumen, mit Polyolen und Treibgasen aus beispielsweise FCKW erhält man Polyurethanhartschaumstoffe sowie Struktur- oder Integralschaumstoffe. Gewöhnlich werden hierbei Hilfsstoffe zugesetzt, beispielsweise Katalysatoren, Emulgatoren, Schaumstabilisatoren, Pigmente, Alterungs- und Flammschutzmittel.

Meist benutzt man Polyurethanschaumstoffe in großem Umfang zur Herstellung von Kissen, Matratzen, Polstermöbeln, Schwämmen, als Verpackungsmaterial, Isoliermaterial bei Bauten, Kühlmöbeln, zur Beschichtung von Teppichen, Winterbekleidung usw.

Auch bekannt ist es, Polyurethanschäume als Komponente von Polierscheiben, beispielsweise zum Polieren von Lacken, einzusetzen. Bei den heute üblichen Polierprozessen werden häufig Oberflächentemperaturen von bis zu 70 °C erreicht, welche dem Lack schaden und Verbrennungen verursachen können.

Die Aufgabe der vorliegenden Erfindung stand deshalb in der Bereitstellung eines Materials, insbesondere zur Verwendung als Polierscheibe, bei dem dieser kritische Temperaturbereich einfach detektiert und somit vermieden werden kann.

Die Aufgabe wird erfindungsgemäß gelöst durch einen Polyurethanschaum umfassend ein thermochromes Farbmittel.

Bevorzugt handelt es sich bei dem Polyurethanschaum um einen offenzelligen, geschlossenzelligen oder gemischtzelligen Polyurethanschaum. Dabei kann der Polyurethanschaum linear oder vernetzt sein. Weiter bevorzugt ist der erfindungsgemäße Polyurethanschaum Prepolymer basiert.

Ein linearer Polyurethanschaum wird erhalten, indem bifunktionelle Diole mit bifunktionellen Isocyanaten umgesetzt werden.

Geeignete Diisocyanat-Komponenten sind beispielsweise ausgewählt aus Diphenylmethandiisocyanat (MDI), polymeres Diphenylmethandiisocyanat (PMDI), Toluylendiisocyanat (TDI), Naphtylendiisocyanat (NDI), Hexamethylendiisocyanat (HDI), Isophorondiisocyanat (ITDI) und 4,4-Diisocyanatodicyclohexylmethan (H12MDI).

Als Diolkomponente können beispielsweise Verbindungen der Formel HO-ROH verwendet werden, wobei R vorzugsweise ausgewählt ist aus einer Alkylengruppe mit 1 bis 40 C-Atomen. Dabei können eine oder mehrere der CH₂-Gruppen des Alkylens ersetzt sein durch -O- oder -COO-, wobei dann ein Polyetherdiol bzw. ein Polyesterdiol entsteht.

Im Rahmen der vorliegenden Erfindung werden unter einer Alkylgruppe mit 1 bis 40 C-Atomen, wobei eine oder mehrere der CH₂-Gruppen des Alkylens ersetzt sein durch -O- oder -COO- bevorzugt die Reste Methyl, Ethyl, n-Propyl, i-Propyl, Cyclopropyl, n-Butyl, i-Butyl, s-Butyl, t-Butyl, Cyclobutyl, 2-Methylbutyl, n-Pentyl, s-Pentyl, Cyclopentyl, n-Hexyl, Cyclohexyl, n-Heptyl, Cycloheptyl, n-Octyl, Cyclooctyl, 2-Ethylhexyl, Trifluormethyl, Pentafluorethyl, 2,2,2-Trifluorethyl, Ethenyl, Propenyl, Butenyl, Pentenyl, Cyclopentenyl, Hexenyl, Cyclohexenyl, Heptenyl, Cycloheptenyl, Octenyl, Cyclooctenyl, Ethinyl, Propinyl, Butinyl, Pentinyl, Hexinyl oder Octinyl verstanden.

Verzweigte bzw. vernetzte Polyurethane können einerseits erhalten werden, indem mit einem Überschuss an der Isocyanat-Komponente gearbeitet wird. Ferner können zur Erzeugung vernetzter bzw. verzweigter Strukturen höherwertigere Isocyanat-Komponenten und Polyol-Komponenten verwendet werden, beispielsweise Toloylendiisocyanat in Verbindung mit einem Polyol (beispielsweise mit Glycerol).

Erfindungsgemäß umfasst der Polyurethanschaum ein thermochromes Farbmittel. Als Farbmittel können sowohl ein thermochromer Farbstoff als auch ein thermochromes Pigment Verwendung finden. Der Farbstoff bzw. das Pigment kann ferner anorganisch oder organisch sein.

Ein Farbstoff zeichnet sich beispielsweise dadurch aus, dass er bezüglich einer Matrix, in der der Farbstoff eingesetzt wird, löslich ist. Pigmente hingegen sind generell unlöslich, wobei dies insbesondere auf anorganische Pigmente zutrifft. Auch organische Farbmittel können als Pigment vorliegen, wobei diese jedoch meist abhängig vom Lösungsmittel (der Matrix) entweder als Pigment oder als Farbstoff vorliegen können.

Insbesondere ist bevorzugt, dass das thermochrome Farbmittel einen Farbumschlagspunkt im Bereich von etwa 50 bis 70 °C, mehr bevorzugt von 55 bis 65 °C, insbesondere 60 °C aufweist. Da Lacke bereits bei etwa 70 °C erste Temperaturschäden erfahren können, ist es also bevorzugt, dass der Farbumschlagspunkt des thermochromen Farbmittels etwas unterhalb dieser Temperatur liegt.

In einer weiteren Ausführungsform der Erfindung ist es bevorzugt, dass das thermochrome Farbmittel einen Farbumschlagspunkt im Bereich von etwa 20 bis 50 °C aufweist. Dieser Bereich ist beispielsweise für andere Anwendungen geeignet.

Die Farbumschlagspunkte können sehr genau eingestellt werden, vorzugsweise in Abstufungen von 5 +/- 2 °C.

Der Farbumschlag soll im Sinne der Erfindung bevorzugt von farbig nach farblos erfolgen. Insbesondere ist bevorzugt, dass das thermochrome Farbmittel zu Beginn rot ist und bei Erreichen der Farbumschlagstemperatur nach farblos wechselt. Ebenso können aber auch alle anderen Farben erfindungsgemäß eingesetzt werden, z.B. blau, grün, schwarz, gelb usw.

In einer Ausführungsform der Erfindung ist es bevorzugt, dass das thermochrome Farbmittel in einer Mikrokapsel eingeschlossen ist. Die Außenhülle der Mikrokapsel ist vorzugsweise transparent, um einen Farbumschlag visuell wahrnehmen zu können.

Die Mikrokapsel enthält ferner eine Matrix und eine Aktivatorverbindung.

Als Matrix dient vorzugsweise ein festes Lösungsmittel. Dieses ist beispielsweise ausgewählt aus Wachsen, niedrig schmelzenden thermoplastischen Harzen, Kautschuk, natürlichen Harzen und synthetischen Harzen. Beispiele dafür sind niedrig molekulargewichtige Polyethylene, niedrig schmelzende Polyester, Ethylenvinylacetatcopolymer, chlorierter Kautschuk, eine Polyvinylacetat-Emulsion, eine Polyethylen-Emulsion, eine Acryl-Emulsion, eine Styrolharz-Emulsion, eine Butadiennitril-Emulsion, Schelllack, Tein, ein ungesättigtes Polyesterharz, ein Epoxyharz, ein Zelluloseharz, ein Polyurethanharz, ein Phenolharz, ein Vinylchloridharz, ein Vinylacetatharz, ein Silikonharz, Polyvinylalkohol, Polyvinylmethylether usw. Insbesondere bevorzugt ist, dass das feste Lösungsmittel einen Schmelzpunkt im Bereich von etwa 50 °C bis 65 °C oder 20 bis 50 °C, wenn der Farbumschlag im Bereich 20 bis 50 °C liegt, aufweist. Durch das Aufschmelzen wird dem thermochromen Farbmittel die Möglichkeit gegeben, mit der Aktivatorverbindung in Kontakt zu treten, wodurch dieses reversibel einen den Farbumschlag von farbig nach farblos erfährt. Entsprechend ist bevorzugt, dass die Aktivatorverbindung in der Lage ist, bei Kontakt mit dem thermochromen Farbmittel in einer geschmolzenen Matrix einen Farbumschlag von farbig nach farblos bei dem Farbmittel herbeizuführen.

In einer Ausführungsform der Erfindung ist es ferner bevorzugt, dass das feste Lösungsmittel einen Siedepunkt von weniger als 150 °C, jedoch von mehr als 90 °C aufweist.

Das thermochrome Farbmittel ist bevorzugt im Bereich von 1 bis 10 Gew.-%, vorzugsweise 1 bis 5 Gew.-%, mehr bevorzugt 1 bis 3 Gew.-% und insbesondere 1 bis 2,5 Gew.-%, bezogen auf das Gesamtgewicht des Polyurethanschaums, in dem Polyurethanschaum vorhanden.

Überraschend wurde gefunden, dass bereits geringe Mengen thermochromes Farbmittel ausreichend sind um den Farbumschlag visuell wahrzunehmen. Zudem verringert sich die Gefahr, dass thermochromes Farbmittel auf einen zu behandelnden Lack übertragen wird und diesen beschädigt. Dies kann insbesondere bei zu hohen Anteilen an thermochromen Farbmittel der Fall sein. Der Einsatz geringerer Mengen des thermochromen Farbmittels ist zudem wirtschaftlich sinnvoll, da diese Substanzen verhältnismäßig teuer sind.

Der erfindungsgemäße Polyurethanschaum kann als Halbzeug oder als Komponente einer Polierscheibe verwendet werden. Die Verwendung als Halbzeug bietet vielfältige Verwendungsmöglichkeiten. Bei Verwendung als Komponente einer Polierscheibe ist der Polyurethanschaum der Teil, welcher bei einem Poliervorgang mit dem Lack in Kontakt tritt. Bei zu großer Drehgeschwindigkeit der Polierscheibe bzw. zu großem Anpressdruck kommt es zu Temperaturerhöhungen, welche bis in den Bereich dringen können, welche Schaden an dem zu polierenden Lack hervorrufen. Durch Verwendung des erfindungsgemäßen Polyurethanschaums als Komponente einer Polierscheibe kann jedoch visuell wahrgenommen werden, ob man sich noch im Temperaturbereich befindet, bei dem der Lack keinen Schaden nimmt. Sobald der Farbumschlag erreicht ist, muss entweder die Rotationsgeschwindigkeit der Polierscheibe verringert oder der Anpressdruck reduziert werden. Dieses System eignet sich somit sowohl für einen menschlichen Benutzer, welcher den Farbumschlag visuell wahrnehmen kann als auch für maschinelle Polieranlagen, wobei dann beispielsweise mit einem Fotodetektor der Farbumschlag detektiert werden kann. Beispielsweise kann seitlich von der Polierscheibe eine Fotodiode angebracht sein, welche über eine Steuerungs- und Regelungseinheit die Rotationsgeschwindigkeit und den Anpressdruck der Polieranlage beeinflussen kann.

Ein weiterer Gegenstand der Erfindung ist ein Verfahren zur Herstellung eines Polyurethanschaums wie oben definiert, umfassend die Schritte:
a) Zudosieren einer Diol- oder Polyol-Komponente zu einer Isocyanat-Komponente,
b) Zugeben einer Additivkomponente,
wobei entweder die Diol- oder Polyol-Komponente oder die Additivkomponente ein thermochromes Farbmittel umfassen.

Vorzugsweise ist das thermochrome Farbmittel im Bereich von > 0 bis 20 Gew.-% in der Diol- oder Polyol-Komponente oder der Additivkomponente vorhanden. Die Angabe des Gewichtsbereichs bezieht sich hier auf Gew.-% bezogen auf die Gesamtmenge der Diol- oder Polyol-Komponente bzw. der Additivkomponente.

Als thermochromes Farbmittel kann insbesondere ein thermochromer Farbstoff oder ein thermochromes Pigment verwendet werden. Das Pigment kann vor der Verarbeitung direkt in die zu verschäumende Polyolformulierung eingearbeitet werden. Aufgrund der niedrigen Ausgangsviskosität des Polyolblends sind hier Füllgrade von > 0 bis 20 % bezogen auf das Polyol möglich. 5 % Anteil an Pigment in der Polyolkomponente sind jedoch meist ausreichend, um den gewünschten Effekt deutlich darzustellen.

Die weitere Möglichkeit zur Einbringung des Farbstoffs in das Reaktionsgemisch ist auch über eine Dosierung in Kombination mit bestimmten Additivkomponenten möglich. Diese Variante bietet sich bei der Verwendung von Mehrkomponentenmischköpfen an. Eine z.B. wässrige Pigmentdispersion kann über eine separate Dosierleitung dem Reaktionsgemisch direkt an einem Mischkopf zugeführt werden. Vorteilhaft ist hierbei jedoch, wenn das Wasser/Farbgemisch unter ständigem Rühren gehalten wird, um Absetzungseffekte des Pigments zu vermeiden. Der Füllgrad, d.h. die Farbkonzentration kann hierbei bis zu 20 % Pigment in Wasser betragen. Diese Variante bietet sich auch für den Weichschaumprozess an. Der Vorteil hierbei sind höhere Füllgrade und somit stärkere Farbintensitäten. Die wässrige Farbdispersion beeinflusst jedoch direkt die Rohdichte des Schaumstoffs.

Wie oben bereits angemerkt, kann das thermochrome Farbmittel in einer Mikrokapsel eingeschlossen werden. Die Mikrokapsel kann dabei eine Matrix und eine Aktivatorverbindung enthalten, wobei als Matrix vorzugsweise ein festes Lösungsmittel, wie oben definiert, verwendet wird. Das feste Lösungsmittel soll wiederum einen Schmelzpunkt im Bereich von etwa 50 °C bis 65 °C aufweisen oder 20 bis 50 °C, wenn der Farbumschlag im Bereich 20 bis 50 °C liegt.

Die Erfindung soll nun anhand einiger Ausführungsbeispiele, welche nicht als limitierend auf den Umfang der Erfindung zu verstehen sind, näher erläutert werden.

### Ausführungsbeispiele:

### Ausführungsbeispiel 1: PU-Weichschaum

| Ansatz des Polyolblends 1: | |
|---|---|
| Polyesterpolyol OH-Zahl 60: | 100 GT (Gewichtsteile) |
| Tertiäres Amin: | 1,5 GT |
| Ionischer Emulgator: | 4,0 GT |
| Nichtionischer Emulgator: | 1,0 GT |
| Wasser: | 4,0 GT |

| Ansatz der Polyolblend/ Farbstoffdispersion | |
|---|---|
| Polyolblend 1: | 100 GT |
| Thermochromer Farbstoff: | 10,0 GT |

| Schaumrezeptur: | |
|---|---|
| Polyolblend 1: | 100 GT |
| Polyolblend/ Farbstoffdispersion: | 20 GT |
| TDI 65: | 63,5 GT |

### Prozessparameter:

| | |
|---|---|
| Polyolblend 1: | 30°C |
| Polyolblend/ Farbstoffdispersion: | 45°C |
| TDI 65: | 20°C |
| Startzeit: | 10 s |
| Reaktionszeit: | 2min 20s |
| Rohdichte: | 25 Kg/m³ |

Farbumschlag erfolgt von rot nach farblos bei 65°C

### Ausführungsbeispiel 2: PU-Weichschaum

| Ansatz des Polyolblends 2: | |
|---|---|
| Polyesterpolyol OH-Zahl 50: | 100 GT |
| Tertiäres Amin: | 1,7 GT |
| Silikon-Stabilisator: | 2,5 GT |
| Wasser: | 2,8 GT |

| Ansatz der Polyolblend/ Farbstoffdispersion | |
|---|---|
| Polyolblend 2: | 100 GT |
| Thermochromer Farbstoff: | 15,0 GT |

| Schaumrezeptur: | |
|---|---|
| Polyolblend 2: | 100 GT |
| Polyolblend/ Farbstoffdispersion: | 25 GT |
| TDI 80: | 46 GT |

### Prozessparameter:

| | |
|---|---|
| Polyolblend 2: | 40°C |
| Polyolblend/ Farbstoffdispersion: | 45°C |
| TDI 65: | 20°C |
| Startzeit: | 7 s |
| Reaktionszeit: | 1 min 40s |
| Rohdichte: | 35 Kg/m³ |

Farbumschlag erfolgt von schwarz nach farblos bei 55°C

### Ausührungsbeispiel 3: PU-Hartschaum

| Ansatz des Polyolblends 3: | |
|---|---|
| Polyetherpolyol trifunktionell, OH- Zahl 400: | 78,0 GT |
| Polyetherpolyol difunktionell, OH-Zahl 250: | 11,0 GT |
| TEG: | 8,0 GT |
| Tertiäres Amin: | 0,50 GT |
| Silikon- Stabilisator: | 2,5 GT |

| Ansatz der Wasser/Farbstoffdispersion | |
|---|---|
| Wasser: | 100 GT |
| Thermochromer Farbstoff: | 20,0 GT |

| Schaumrezeptur: | |
|---|---|
| Polyolblend 3: | 97,0 GT |
| Wasser/ Farbstoffdispersion: | 30 GT |
| PMDI: | 123,5 GT |

### Prozessparameter:

| | |
|---|---|
| Polyolblend 3: | 25°C |
| Wasser/ Farbstoffdispersion: | 25°C |
| PMDI: | 25°C |
| Startzeit: | 30 s |
| Reaktionszeit: | 4min 30s |
| Rohdichte: | 60 Kg/m³ |

Farbumschlag erfolgt von blau nach farblos bei 25°C

## Patentansprüche

1. Polyurethanschaum umfassend ein thermochromes Farbmittel.

2. Polyurethanschaum gemäß Anspruch 1, **dadurch gekennzeichnet, dass** der Polyurethanschaum ein offenzelliger, geschlossenzelliger oder gemischtzelliger Polyurethanschaum ist.

3. Polyurethanschaum gemäß Anspruch 1 oder 2, **dadurch gekennzeichnet, dass** der Polyurethanschaum linear oder vernetzt ist.

4. Polyurethanschaum gemäß einem der Ansprüche 1 bis 3, **dadurch gekennzeichnet, dass** das thermochrome Farbmittel ein thermochromer Farbstoff oder ein thermochromes Pigment ist.

5. Polyurethanschaum gemäß einem der Ansprüche 1 bis 4, **dadurch gekennzeichnet, dass** das thermochrome Farbmittel einen Farbumschlagspunkt im Bereich von 50 bis 70 °C, bevorzugt etwa 60 °C, aufweist.

6. Polyurethanschaum gemäß einem der Ansprüche 1 bis 4, **dadurch gekennzeichnet, dass** das thermochrome Farbmittel einen Farbumschlagspunkt im Bereich von 20 bis 50 °C, aufweist.

7. Polyurethanschaum gemäß einem der Ansprüche 1 bis 6, **dadurch gekennzeichnet, dass** das thermochrome Farbmittel in einer Mikrokapsel eingeschlossen ist.

8. Polyurethanschaum gemäß Anspruch 7, **dadurch gekennzeichnet, dass** die Mikrokapsel ferner eine Matrix und eine Aktivatorverbindung enthält.

9. Polyurethanschaum gemäß Anspruch 8, **dadurch gekennzeichnet, dass** die Matrix ein festes Lösungsmittel ist.

10. Polyurethanschaum gemäß Anspruch 9, **dadurch gekennzeichnet, dass** das feste Lösungsmittel einen Schmelzpunkt im Bereich von etwa 50 °C bis 65 °C oder 20 bis 50 °C aufweist.

11. Polyurethanschaum gemäß einem der Ansprüche 8 bis 10, **dadurch gekennzeichnet, dass** die Aktivatorverbindung in der Lage ist, bei Kontakt mit dem thermochromen Farbmittel in einer geschmolzenen Matrix einen Farbumschlag von farbig nach farblos bei dem Farbmittel herbeizuführen.

12. Polyurethanschaum gemäß einem der voranstehenden Ansprüche, **dadurch gekennzeichnet, dass** das thermochrome Farbmittel im Bereich von 1 bis 11 Gew.-%, bezogen auf das Gesamtgewicht des Polyurethanschaums, in dem Polyurethanschaum vorhanden ist.

13. Verwendung eines Polyurethanschaums gemäß einem der Ansprüche 1 bis 12 als Halbzeug oder als Komponente einer Polierscheibe.

14. Verfahren zur Herstellung eines Polyurethanschaums gemäß einem der Ansprüche 1 bis 12 umfassend die Schritte:
a) Zudosieren einer Diol- oder Polyolkomponente zu einer Isocyanatkomponente,
b) Zugeben einer Additivkomponente,
wobei entweder die Diol- oder Polyolkomponente oder die Additivkomponente ein thermochromes Farbmittel umfassen.

15. Verfahren gemäß Anspruch 14, **dadurch gekennzeichnet, dass** das thermochrome Farbmittel im Bereich von > 0 bis 20 Gew.-% in der Diol- oder Polyolkomponente oder der Additivkomponente vorhanden ist.

16. Verfahren gemäß Anspruch 14 oder 15, **dadurch gekennzeichnet, dass** als thermochromes Farbmittel ein thermochromer Farbstoff oder ein thermochromes Pigment verwendet wird.

17. Verfahren gemäß einem der Ansprüche 14 bis 16, **dadurch gekennzeichnet, dass** das thermochrome Farbmittel in einer Mikrokapsel eingeschlossen wird.

18. Verfahren gemäß Anspruch 17, **dadurch gekennzeichnet, dass** in die Mikrokapsel ferner eine Matrix und eine Aktivatorverbindung eingeschlossen wird.

19. Verfahren gemäß Anspruch 18, **dadurch gekennzeichnet, dass** als Matrix ein festes Lösungsmittel verwendet wird.

20. Verfahren gemäß Anspruch 19, **dadurch gekennzeichnet, dass** das feste Lösungsmittel einen Schmelzpunkt im Bereich von etwa 50 °C bis 65 °C oder 20 bis 50 °C aufweist.

## Geänderte Patentansprüche

### Geänderte Patentansprüche gemäss Regel 137(2) EPÜ.

**1.** Polyurethanschaum umfassend ein thermochromes Farbmittel, **dadurch gekennzeichnet, dass** das thermochrome Farbmittel im Bereich von 1 bis 3 Gew.-%, bezogen auf das Gesamtgewicht des Polyurethanschaums, in dem Polyurethanschaum vorhanden ist.

**2.** Polyurethanschaum gemäß Anspruch 1, **dadurch gekennzeichnet, dass** der Polyurethanschaum ein offenzelliger, geschlossenzelliger oder gemischtzelliger Polyurethanschaum ist.

**3.** Polyurethanschaum gemäß Anspruch 1 oder 2, **dadurch gekennzeichnet, dass** der Polyurethanschaum linear oder vernetzt ist.

**4.** Polyurethanschaum gemäß einem der Ansprüche 1 bis 3, **dadurch gekennzeichnet, dass** das thermochrome Farbmittel ein thermochromer Farbstoff oder ein thermochromes Pigment ist.

**5.** Polyurethanschaum gemäß einem der Ansprüche 1 bis 4, **dadurch gekennzeichnet, dass** das thermochrome Farbmittel einen Farbumschlagspunkt im Bereich von 50 bis 70 °C, bevorzugt etwa 60 °C, aufweist.

**6.** Polyurethanschaum gemäß einem der Ansprüche 1 bis 4, **dadurch gekennzeichnet, dass** das thermochrome Farbmittel einen Farbumschlagspunkt im Bereich von 20 bis 50 °C, aufweist.

**7.** Polyurethanschaum gemäß einem der Ansprüche 1 bis 6, **dadurch gekennzeichnet, dass** das thermochrome Farbmittel in einer Mikrokapsel eingeschlossen ist.

**8.** Polyurethanschaum gemäß Anspruch 7, **dadurch gekennzeichnet, dass** die Mikrokapsel ferner eine Matrix und eine Aktivatorverbindung enthält.

**9.** Polyurethanschaum gemäß Anspruch 8, **dadurch gekennzeichnet, dass** die Matrix ein festes Lösungsmittel ist.

**10.** Polyurethanschaum gemäß Anspruch 9, **dadurch gekennzeichnet, dass** das feste Lösungsmittel einen Schmelzpunkt im Bereich von etwa 50 °C bis 65 °C oder 20 bis 50 °C aufweist.

**11.** Polyurethanschaum gemäß einem der Ansprüche 8 bis 10, **dadurch gekennzeichnet, dass** die Aktivatorverbindung in der Lage ist, bei Kontakt mit dem thermochromen Farbmittel in einer geschmolzenen Matrix einen Farbumschlag von farbig nach farblos bei dem Farbmittel herbeizuführen.

**12.** Verwendung eines Polyurethanschaums gemäß einem der Ansprüche 1 bis 11 als Halbzeug oder als Komponente einer Polierscheibe.

**13.** Verfahren zur Herstellung eines Polyurethanschaums gemäß einem der Ansprüche 1 bis 11 umfassend die Schritte:
a) Zudosieren einer Diol- oder Polyolkomponente zu einer Isocyanatkomponente,
b) Zugeben einer Additivkomponente,
wobei entweder die Diol- oder Polyolkomponente oder die Additivkomponente ein thermochromes Farbmittel umfassen.

**14.** Verfahren gemäß Anspruch 13, **dadurch gekennzeichnet, dass** das thermochrome Farbmittel im Bereich von > 0 bis 20 Gew.-% in der Diol- oder Polyolkomponente oder der Additivkomponente vorhanden ist.

**15.** Verfahren gemäß Anspruch 13 oder 14, **dadurch gekennzeichnet, dass** als thermochromes Farbmittel ein thermochromer Farbstoff oder ein thermochromes Pigment verwendet wird.

**16.** Verfahren gemäß einem der Ansprüche 13 bis 15, **dadurch gekennzeichnet, dass** das thermochrome Farbmittel in einer Mikrokapsel eingeschlossen wird.

**17.** Verfahren gemäß Anspruch 16, **dadurch gekennzeichnet, dass** in die Mikrokapsel ferner eine Matrix und eine Aktivatorverbindung eingeschlossen wird.

**18.** Verfahren gemäß Anspruch 17, **dadurch gekennzeichnet, dass** als Matrix ein festes Lösungsmittel verwendet wird.

**19.** Verfahren gemäß Anspruch 18, **dadurch gekennzeichnet, dass** das feste Lösungsmittel einen Schmelzpunkt im Bereich von etwa 50 °C bis 65 °C oder 20 bis 50 °C aufweist.
